# EUROPEAN PATENT APPLICATION

(11) **EP 4 826 834 A1**
(43) Date of publication of application: **21.10.2026**
(21) Application number: 25863952.5
(22) Date of filing: 26.08.2025
(51) Int. Cl.: H01M 10/42, H01M 50/24, H01M 10/613, H01M 10/635, H01M 10/6568, H01M 10/6569, H01M 50/249, H01M 10/625

(54) **PACK HOUSING, BATTERY PACK COMPRISING SAME, METHOD FOR COOLING BATTERY PACK, AND VEHICLE COMPRISING SAME**

(30) Priority: 09.09.2024 KR 20240122525
(71) Applicant: LG Energy Solution, Ltd., Seoul 07335 (KR)
(72) Inventor: LEE, Jung Hoon, Daejeon 34122 (KR); JUNG, Hye Mi, Daejeon 34122 (KR)
(74) Representative: Plasseraud IP
(86) International application number: PCT/KR2025/012986
(87) International publication number: WO 2026/054403

(57) **Abstract**

According to exemplary embodiments of the present disclosure, a pack housing is provided. The pack housing includes: a base plate intersecting a first direction; a cooling channel within the base plate, comprising a sub-flow path and a main flow path supplying coolant to the sub-flow path; and a blocking member within the sub-flow path, wherein the blocking member includes a bimetal part comprising a first metal and a second metal having different thermal expansion coefficients and arranged in a second direction intersecting the first direction.

## Description

### [Technical Field]

The present disclosure relates to a pack housing, a battery pack including the same, a battery pack cooling method, and a vehicle including the same. This application claims the benefit of Korean Patent Application No. 10-2024-0122525, filed on September 9, 2024, the disclosure of which is incorporated herein by reference.

### [Background]

Unlike primary batteries, secondary batteries can be charged and discharged a plurality of times. Secondary batteries are widely used as energy sources for various wireless devices such as handsets, laptops, and cordless vacuum cleaners. Recently, due to improvements in energy density and economies of scale, the manufacturing cost per unit capacity of secondary batteries has decreased dramatically. As the cruising range of battery electric vehicles (BEVs) has increased to levels comparable to fuel vehicles, the primary application of secondary batteries is shifting from mobile devices to mobility.

The trend in technology development for mobility secondary batteries is the improvement of energy density and safety. The safety of mobility secondary batteries is extremely important as it is directly related to passenger lives. The safety of secondary batteries can be achieved through mechanical robustness, reliability of electrical insulation, and thermal propagation delay during thermal runaway events.

### [Summary]

### [Technical Problem]

A technical problem to be solved by the technical concept of the present disclosure is to provide a pack housing with enhanced safety.

A technical problem to be solved by the technical concept of the present disclosure is to provide a pack housing with improved performance and reliability.

A technical problem to be solved by the technical concept of the present disclosure is to provide a battery pack with enhanced safety.

A technical problem to be solved by the technical concept of the present disclosure is to provide a battery pack with improved performance and reliability.

A technical problem to be solved by the technical concept of the present disclosure is to provide a battery pack cooling method with enhanced safety.

A technical problem to be solved by the technical concept of the present disclosure is to provide a battery pack cooling method with improved performance and reliability.

A technical problem to be solved by the technical concept of the present disclosure is to provide a vehicle with enhanced safety.

A technical problem to be solved by the technical concept of the present disclosure is to provide a vehicle with improved performance and reliability.

### [Technical Solution]

According to exemplary embodiments of the present disclosure for solving the above-mentioned problems, a pack housing is provided. The pack housing includes: a base plate intersecting a first direction; a cooling channel within the base plate, including a sub-flow path and a main flow path supplying coolant to the sub-flow path; and a blocking member within the sub-flow path, wherein the blocking member includes a bimetal part including a first metal and a second metal having different thermal expansion coefficients and arranged in a second direction intersecting the first direction.

Upon occurrence of a thermal runaway event of the battery cell assembly overlapping the sub-flow path in the first direction, the blocking member may be configured to close the sub-flow path.

The blocking member includes a first state at a first temperature and a second state at a second temperature, wherein the second temperature is higher than the first temperature, and the length of the bimetal part in the second direction in the second state may be greater than the length in the second direction in the first state.

The blocking member includes a first state at a first temperature and a second state at a second temperature, wherein the second temperature is higher than the first temperature, in the first state, the sub-flow path is connected to the main flow path, and in the second state, the sub-flow path may be blocked from the main flow path.

In the first state, the coolant is supplied to the sub-flow path, and in the second state, the coolant may not be supplied to the sub-flow path.

The blocking member further includes a fixed part and a plug part, wherein when the temperature of the battery cell assembly overlapping the sub-flow path in the first direction rises, the relative position of the plug part with respect to the fixed portion may move in the second direction.

The sub-flow path further includes a connection portion with the main flow path, wherein the blocking member is disposed within the connection portion, and upon temperature rise of the battery cell assembly, the plug part may contact an inner wall of the connection portion to close the sub-flow path.

The blocking member includes a first state at a first temperature and a second state at a second temperature, wherein the second temperature is higher than the first temperature, the sub-flow path further includes a connection portion with the main flow path, the blocking member is disposed within the connection portion, wherein in the first state, the coolant flows into the sub-flow path through the connection portion, and in the second state, the blocking member may block the movement of the coolant through the connection portion.

The bimetal part includes a first layer and a second layer each including the first metal and the second metal, respectively, wherein the second metal of the first layer and the second metal of the second layer may be arranged consecutively in the second direction.

According to exemplary embodiments of the present disclosure for solving the above-mentioned problems, a battery pack is provided. The battery pack includes: a pack housing comprising a base plate; a cooling channel within the base plate, including a first sub-flow path and a main flow path supplying coolant to the first sub-flow path; a first battery cell assembly positioned on the base plate and overlapping the first sub-flow path in a first direction; and a blocking member positioned within the first sub-flow path, wherein the first battery cell assembly includes a first state at a first temperature and a second state at a second temperature, wherein the second temperature is higher than the first temperature, the blocking member includes a bimetal part including a first metal and a second metal having different thermal expansion coefficients and arranged in a second direction intersecting the first direction, wherein in the second state of the first battery cell assembly, the blocking member may be configured to close the first sub-flow path.

In the first state, the first sub-flow path is connected to the main flow path, and in the second state, the first sub-flow path may be blocked from the main flow path.

The cooling channel further includes a second sub-flow path, and further includes a second battery cell assembly overlapping the second sub-flow path in the first direction, wherein in the first state, the main flow path is connected to both the first sub-flow path and the second sub-flow path, and the first sub-flow path communicates with the second sub-flow path through the main flow path, and in the second state, the first sub-flow path may be blocked from the second sub-flow path.

In the first state, the coolant is supplied from the main flow path to the first sub-flow path, and subsequently from the first sub-flow path to the second sub-flow path via the main flow path, and in the second state, the coolant may be supplied from the main flow path to the second sub-flow path without passing through the first sub-flow path.

The first state is a normal state of the first battery cell assembly, and the second state may be a thermal runaway state of the first battery cell assembly.

### [Advantageous Effects]

According to exemplary embodiments of the present disclosure, a ack housing may include a blocking member disposed within a sub-flow path. The blocking member includes a bimetal part and can expand in one direction when a thermal runaway event occurs in the battery cell assembly, thereby closing the sub-flow path. By preventing coolant from flowing into the sub-flow path under the battery cell assembly where the thermal runaway event has occurred, the cooling performance of the coolant can be maintained for a longer period.

According to exemplary embodiments of the present disclosure, a pack housing with enhanced safety can be provided.

According to exemplary embodiments of the present disclosure, a pack housing with improved performance and reliability can be provided.

According to exemplary embodiments of the present disclosure, a battery pack with enhanced safety can be provided.

According to exemplary embodiments of the present disclosure, a battery pack with improved performance and reliability can be provided.

According to exemplary embodiments of the present disclosure, a battery pack cooling method with enhanced safety can be provided.

According to exemplary embodiments of the present disclosure, a battery pack cooling method with improved performance and reliability can be provided.

According to exemplary embodiments of the present disclosure, a vehicle with enhanced safety can be provided.

According to exemplary embodiments of the present disclosure, a vehicle with improved performance and reliability can be provided.

The effects that can be obtained from the exemplary embodiments of the present disclosure are not limited to the effects mentioned above, and other effects not mentioned can be clearly derived and understood by one having ordinary knowledge in the technical field to which the exemplary embodiments of the present disclosure belong from the following description. In other words, unintended effects of practicing the exemplary embodiments of the present disclosure can also be derived from the exemplary embodiments of the present disclosure by one having ordinary knowledge in the technical field.

### [Brief Description of the Drawings]

FIG. 1 is a plan view schematically showing a battery pack according to exemplary embodiments according to the technical concept of the present disclosure.
FIG. 2 is a plan view schematically showing a cooling channel of a pack housing according to exemplary embodiments according to the technical concept of the present disclosure.
FIG. 3 is a plan view for explaining a blocking member of a pack housing according to exemplary embodiments according to the technical concept of the present disclosure.
FIG. 4 is a plan view for explaining a blocking member of a pack housing according to exemplary embodiments according to the technical concept of the present disclosure.
FIG. 5 is a plan view for explaining a blocking member of a pack housing according to exemplary embodiments according to the technical concept of the present disclosure.
FIG. 6 is a plan view for explaining a blocking member of a pack housing according to exemplary embodiments according to the technical concept of the present disclosure.
FIG. 7 is a plan view for explaining a pack housing according to exemplary embodiments according to the technical concept of the present disclosure.
FIG. 8 is a plan view for explaining a pack housing according to exemplary embodiments according to the technical concept of the present disclosure.
FIG. 9 is a plan view for explaining a pack housing according to exemplary embodiments according to the technical concept of the present disclosure.
FIG. 10 is a flowchart for explaining a battery pack cooling method according to exemplary embodiments according to the technical concept of the present disclosure.
FIG. 11 is a diagram schematically showing a vehicle including a battery pack according to exemplary embodiments according to the technical concept of the present disclosure.

### [Best Mode for Carrying out the Invention]

Hereinafter, preferred embodiments of the present disclosure will be described in detail with reference to the accompanying drawings. It should be noted that the terms and words used in this specification and claims are not to be construed in their ordinary or dictionary sense, but rather in a sense and concept consistent with the technical idea of the disclosure, based on the principle that the inventor may define the concept of a term as he sees fit to best describe his disclosure.

Accordingly, it is to be understood that the embodiments described herein and the configurations shown in the drawings are only the most preferred embodiments of the disclosure and are not exhaustive of the technical ideas of the disclosure, and that there may be various equivalents and modifications that may be substituted for them at the time of filing.

Furthermore, in describing the present disclosure, specific descriptions of related known configurations or features are omitted where it is deemed that such detailed description would obscure the essence of the disclosure.

Because the embodiments of the present disclosure are provided to more fully explain the disclosure to those of ordinary skill in the art, the shapes and sizes of components in the drawings may be exaggerated, omitted, or shown schematically for clarity. Accordingly, the size or proportion of each component is not necessarily indicative of its actual size or proportion.

### (First embodiment)

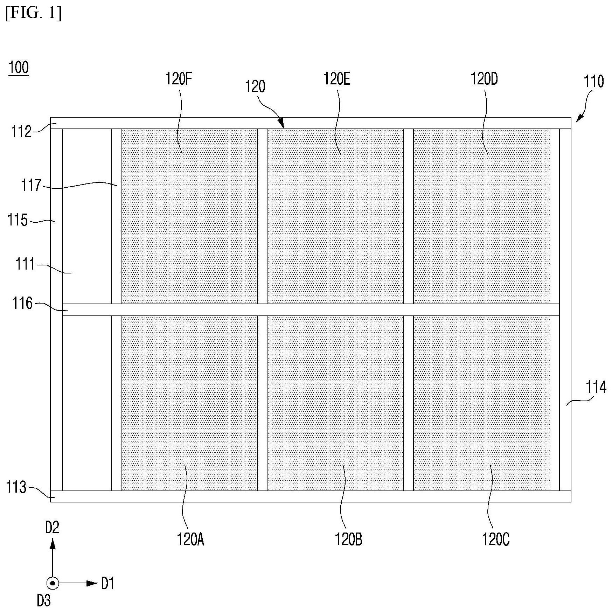

FIG. 1 is a plan view schematically showing a battery pack 100 according to exemplary embodiments according to the technical concept of the present disclosure.

Referring to FIG. 1, the battery pack 100 may include a pack housing 110 and a plurality of battery cell assemblies 120. The battery pack 100 may be a final product mounted in an application such as a vehicle.

The pack housing 110 may provide a space for mounting the battery cell assemblies 120. The pack housing 110 may include a base plate 111, side walls 112, 113, 114, 115, a center beam 116, and cross beams 117.

Here, the first direction D1 and the second direction D2 may be substantially parallel to the mounting surface of the base plate 111 (i.e., the surface facing the battery cell assembly 120), and the third direction D3 may be substantially perpendicular to the mounting surface of the base plate 111.

The side walls 112, 113, 114, 115 may be substantially perpendicular to the base plate 111. The side walls 112, 113 may extend in the first direction D1. The side walls 114, 115 may extend in the second direction D2.

The center beam 116 may extend in the first direction D1. The center beam 116 may be interposed between the side walls 112, 113. The cross beams 117 may extend in the second direction D2. The cross beams 117 may be interposed between the side walls 114, 115.

A plurality of battery cell assemblies 120 may be disposed on the base plate 111 of the pack housing 110. The base plate 111 may support the plurality of battery cell assemblies 120. The side walls 112, 113, 114, 115 may horizontally surround the plurality of battery cell assemblies 120. The side walls 112, 113, 114, 115 may protect the plurality of battery cell assemblies 120. The plurality of battery cell assemblies 120 may be disposed on the base plate 111 in spaces defined by the cross beams 117.

The battery cell assembly 120 may further include a plurality of battery cells disposed in the first direction D1 and pads disposed between the plurality of battery cells. The pad is disposed between the plurality of battery cells in the first direction D1 and may overlap with the plurality of battery cells in the first direction D1.

The pad may absorb swelling of the plurality of battery cells. The pad may include a compressible material. The pad may include PU (Poly Urethane). The pad may also include a fire-resistant material.

The battery pack 100 may further include a pack lid coupled to the side walls 112, 113, 114, 115 of the pack housing 110. The pack lid may cover elements mounted inside the battery pack 100, such as the plurality of battery cell assemblies 120 and electrical components. The pack lid may be fixed to the pack housing 110 by mechanical coupling means such as bolting.

In FIG. 1, the arrangement of the plurality of battery cell assemblies 120 can be referred to as a 3 * 2 arrangement. For example, the plurality of battery cell assemblies 120 may include a first battery cell assembly 120A, a second battery cell assembly 120B, a third battery cell assembly 120C, a fourth battery cell assembly 120D, a fifth battery cell assembly 120E, and a sixth battery cell assembly 120F arranged in a 3 * 2 arrangement. The arrangement of the plurality of battery cell assemblies 120 disclosed in FIG. 1 is a non-limiting example and does not limit the technical concept of the present disclosure in any sense. Those skilled in the art will be able to easily reach a plurality of battery cell assemblies 120 arranged in M * N (where M and N are each integers of 2 or more) based on what is described herein.

The battery pack 100 may further include a BMS (Battery Management System). The BMS may be configured to perform monitoring, balancing, and control of the battery pack 100. Monitoring of the battery pack 100 may include measuring voltages and currents at specific nodes inside the plurality of battery cell assemblies 120 and measuring temperatures at set positions inside the battery pack 100. The battery pack 100 may include instruments for measuring the above-mentioned voltages, currents, and temperatures.

Balancing of the battery pack 100 is an operation to reduce variations among the plurality of battery cell assemblies 120. Control of the battery pack 100 includes preventing the occurrence of overcharging, over-discharging, and overcurrent. Through monitoring, balancing, and control, the battery pack 100 can operate under optimal conditions, thereby preventing shortening of the lifespan of each of the plurality of battery cell assemblies 120.

The battery pack 100 may further include additional electrical components such as a cooling device, PRA (Power Relay Assembly), and safety plug. The cooling device may include a cooling fan. The cooling fan may prevent overheating of each of the plurality of battery cell assemblies 120 by circulating air inside the battery pack 100. The PRA may be configured to supply or cut off power from the high-voltage battery to an external load (e.g., a vehicle motor). The PRA may protect the plurality of battery cell assemblies 120 and the external load (e.g., a vehicle motor) by cutting off power supply to the external load (e.g., a vehicle motor) in situations where abnormal voltages such as voltage surges occur. The additional electrical components may be interposed between the plurality of battery cell assemblies 120 and the side wall 115. The space between the battery cell assemblies 120 and the side wall 115 may also be referred to as an electrical component mounting area.

The battery pack 100 may further include a plurality of inter-busbars configured to electrically connect the plurality of battery cell assemblies 120. The plurality of battery cell assemblies 120 may be connected in series by the plurality of inter-busbars. Accordingly, the battery pack 100 may be configured to output a high voltage to an external load (e.g., a vehicle motor).

### (Second embodiment)

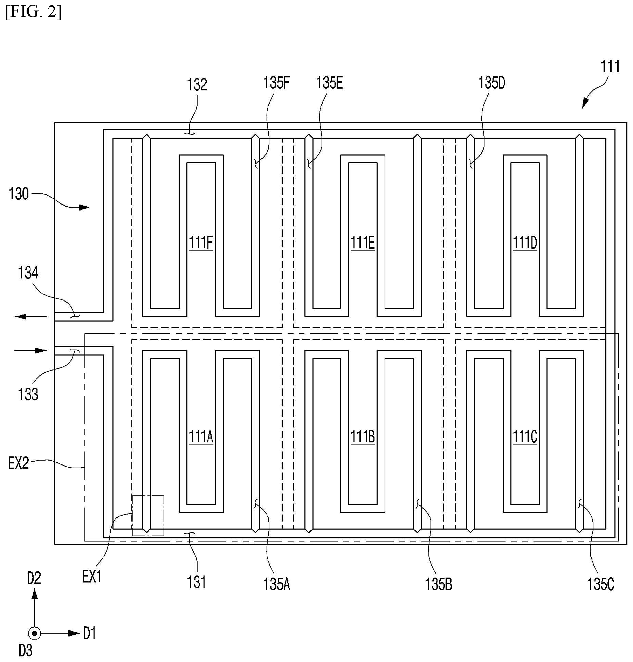

FIG. 2 is a plan view schematically illustrating a cooling channel 130 of a pack housing 110 according to exemplary embodiments based on the technical concept of the present disclosure.

Referring to FIGS. 1 and 2 together, the base plate 111 of the pack housing 110 may include a first region 111A to a sixth region 111F. The first region 111A to the sixth region 111F of the base plate 111 respectively correspond to the area below the first battery cell assembly 120A to the sixth battery cell assembly 120F, respectively, and may correspond to the first battery cell assembly 120A to the sixth battery cell assembly 120F, respectively. For example, the first battery cell assembly 120A is disposed on the first region 111A of the base plate 111, and the first region 111A may overlap with the first battery cell assembly 120A in the third direction D3. A second battery cell assembly 120B is disposed on a second region 111B of the base plate 111, and the second region 111B can overlap with the second battery cell assembly 120B in a third direction D3. A third battery cell assembly 120C is disposed on a third region 111C of the base plate 111, and the third region 111C can overlap with the third battery cell assembly 120C in a third direction D3. A fourth battery cell assembly 120D is disposed on a fourth region 111D of the base plate 111, and the fourth region 111D can overlap with the fourth battery cell assembly 120D in a third direction D3. A fifth battery cell assembly 120E is disposed on a fifth region 111E of the base plate 111, and the fifth region 111E can overlap with the fifth battery cell assembly 120E in the third direction D3. A sixth battery cell assembly 120F is disposed on a sixth region 111F of the base plate 111, and the sixth region 111F can overlap with the sixth battery cell assembly 120F in the third direction D3.

A cooling channel 130 may be disposed within the base plate 111. The cooling channel 130 may include a first sub-flow path 135A to a sixth sub-flow path 135F. The first sub-flow path 135A to the sixth sub-flow path 135F are each disposed within the first region 111A to the sixth region 111F of the base plate 111 and may correspond to the first battery cell assembly 120A to the sixth battery cell assembly 120F. For example, the first sub-flow path 135A is disposed beneath the first battery cell assembly 120A, overlaps with the first battery cell assembly 120A in the third direction D3, and can cool the first battery cell assembly 120A. The second sub-flow path 135B is disposed beneath the second battery cell assembly 120B, overlaps the second battery cell assembly 120B in the third direction D3, and can cool the second battery cell assembly 120B. The third sub-flow path 135C is disposed beneath the third battery cell assembly 120C, overlaps the third battery cell assembly 120C in the third direction D3, and can cool the third battery cell assembly 120C. The fourth sub-flow path 135D is disposed beneath the fourth battery cell assembly 120D, overlaps the fourth battery cell assembly 120D in the third direction D3, and can cool the fourth battery cell assembly 120D. The fifth sub-flow path 135E is disposed beneath the fifth battery cell assembly 120E, overlaps with the fifth battery cell assembly 120E in the third direction D3, and can cool the fifth battery cell assembly 120E. The sixth sub-flow path 135F is disposed beneath the sixth battery cell assembly 120F, overlaps the sixth battery cell assembly 120F in the third direction D3, and can cool the sixth battery cell assembly 120F.

The cooling channel 130 may further include a first main flow path 131 that supplies coolant to the first sub-flow path 135A, the second sub-flow path 135B, and the third sub-flow path 135C. The first main flow path 131 may be connected to each of the first sub-flow path 135A, the second sub-flow path 135B, and the third sub-flow path 135C.

The cooling channel 130 may further include a second main flow path 132 supplying coolant to a fourth sub-flow path 135D, a fifth sub-flow path 135E, and a sixth sub-flow path 135F. The second main flow path 132 may be connected to the fourth sub-flow path 135D, the fifth sub-flow path 135E, and the sixth sub-flow path 135F, respectively. The second main flow path 132 may be connected to the first main flow path 131.

The cooling channel 130 may further include an inlet port 133 and a outlet port 134. The inlet port 133 is connected to a coolant reservoir, enabling it to supply coolant to the first main flow path 131 and the second main flow path 132. The outlet port 134 can discharge coolant that has passed through the first main flow path 131 and the second main flow path 132 from the cooling channel 130.

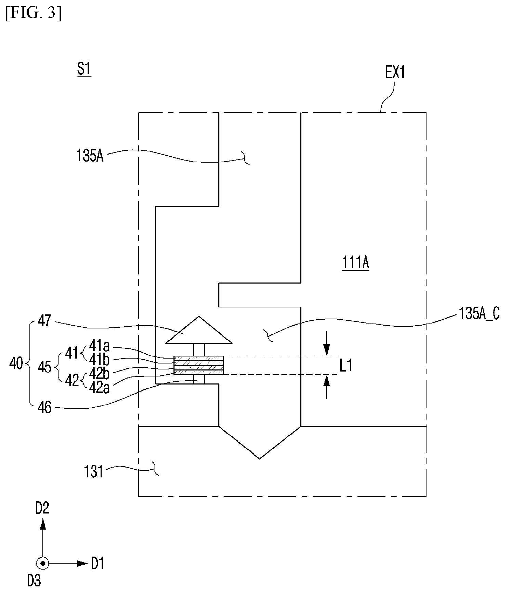

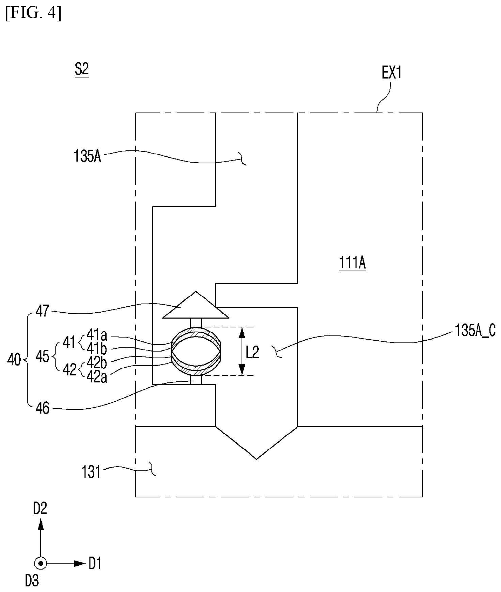

Blocking members may be disposed within the first sub-flow path 135A to the sixth sub-flow path 135F of the cooling channel 130 to close them off from the main flow paths 131, 132. Hereinafter, with reference to FIGS. 3 and 4, the blocking member 40 within the first sub-flow path 135A will be described by way of example.

FIG. 3 is a plan view illustrating the blocking member 40 of the pack housing 110 according to exemplary embodiments based on the technical concept of the present disclosure. Specifically, FIG. 3 is an enlarged view of the EX1 region in FIG. 2, showing the blocking member 40 in the first state S1.

FIG. 4 is a plan view illustrating the blocking member 40 of the pack housing 110 according to exemplary embodiments based on the technical concept of the present disclosure. Specifically, FIG. 4 is an enlarged view of the EX1 region in FIG. 2, showing the blocking member 40 in the second state S2.

Referring collectively to FIGS. 1, 3, and 4, a blocking member 40 may be disposed within the first sub-flow path 135A. The blocking member 40 may be configured to close the first sub-flow path 135A upon occurrence of a thermal runaway event in the first battery cell assembly 120A.

The blocking member 40 may include a bimetal part 45, a fixed part 46, and a plug part 47. The fixed part 46 may be a part fixed to one wall within the first sub-flow path 135A. The plug part 47 may be disposed on the bimetal part 45, such that its position changes as the length of the bimetal part 45 changes.

The bimetal part 45 may include a first metal and a second metal having different thermal expansion coefficients. For example, the thermal expansion coefficient of the first metal may be greater than that of the second metal. Specifically, the bimetal part 45 may include a first layer 41 and a second layer 42 including the first metal and the second metal, respectively. The first layer 41 may include a first metal layer 41a and a second metal layer 41b. The second layer 42 may include a first metal layer 42a and a second metal layer 42b. The second metal layer 41b of the first layer 41 and the second metal layer 42b of the second layer 42 may be disposed consecutively. For example, the second metal layer 41b of the first layer 41 and the second metal layer 42b of the second layer 42 may be disposed in contact in a first state S1. The first metal layer 41a of the first layer 41 and the first metal layer 42a of the second layer 42 may be spaced apart with the second metal layer 41b and the second metal layer 42b interposed between them. Although FIGS. 3 and 4 illustrate the bimetal part 45 as including one first layer 41 and one second layer 42, respectively, it is understood that the bimetal part 45 according to the technical concept of the present disclosure may include more than one first layer 41 and more than one second layer 42.

The first layer 41 and the second layer 42 may be arranged in a second direction D2. The first metal layer 41a and the second metal layer 41b of the first layer 41 may be arranged in the second direction D2. The first metal layer 42a and second metal layer 42b of the second layer 42 may be arranged in the second direction D2.

Specifically, the blocking member 40 may be disposed at the boundary between the first sub-flow path 135A and the first main flow path 131. For example, the first sub-flow path 135A may include two portions connected to the first main flow path 131, and the blocking member 40 may be disposed within these two portions. For example, it may include an inlet part where coolant flows into the first sub-flow path 135A and an outlet part where coolant flows out of the first sub-flow path 135A, and the blocking member 40 may be disposed at these two boundaries.

In a first state S1 as illustrated in FIG. 3, the first battery cell assembly 120A may be in a normal state where no thermal runaway event has occurred. In the first state S1, the temperature of the first battery cell assembly 120A may be a first temperature. For example, the first temperature may be less than 100°C. For example, the first temperature may be less than 60°C.

In the first state S1, the blocking member 40 may be in a non-expanded state. Specifically, the bimetal part 45 may be in a non-expanded state. For example, the first layer 41 and second layer 42 of the bimetal part 45 may be joined together in a form where they are in contact in the second direction D2. In the first state S1, the length of the bimetal part 45 in the second direction D2 may be a first length L1. In the first state S1, the blocking member 40 may not block the first sub-flow path 135A. Specifically, in the first state S1, the blocking member 40 may not block the first sub-flow path 135A from the first main flow path 131. In the first state S1, the first sub-flow path 135A may be connected to the first main flow path 131.

For example, the first sub-flow path 135A may include a connection portion 135A_C with the first main flow path 131. The blocking member 40 may be disposed within the connection portion 135A_C. In the first state S1, the blocking member 40 may not completely block the connection portion 135A_C, leaving a void space. Coolant supplied from the first main flow path 131 may flow into the first sub-flow path 135A through the void space.

In the second state S2, as illustrated in FIG. 4, the first battery cell assembly 120A may be in a state where a thermal runaway event has occurred. In the second state S2, the temperature of the first battery cell assembly 120A may be a second temperature. The second temperature may be higher than the first temperature in the first state S1. For example, the second temperature may be 100°C or higher.

In the second state S2, the blocking member 40 may expand in a second direction D2. Specifically, the bimetal part 45 may expand in the second direction D2. For example, as the temperature of the first battery cell assembly 120A rises, the temperature of the first region 111A and the first sub-flow path 135A may rise, and the bimetal part 45 may bend and expand toward the first metal having a larger thermal expansion coefficient. For example, the first layer 41 may convexly bend toward the first metal layer 41a, and the second layer 42 may convexly bend toward the second metal layer 42a. As the first layer 41 and second layer 42 deform by convexly bending in different directions, displacement may occur. The bimetal part 45 can expand by a distance equal to the sum of the displacement of the first layer 41 and the displacement of the second layer 42 in the second direction D2.

In the second state S2, the length of the bimetal part 45 in the second direction D2 may be a second length L2. For example, the second length L2 in the second direction D2 of the bimetal part 45 in the second state S2 may be greater than the first length L1 in the second direction D2 in the first state S1. For example, the length in the second direction D2 of the blocking member 40 in the second state S2 may be greater than the length in the second direction D2 in the first state S1.

In the second state S2, as the blocking member 40 expands in the second direction D2, the first sub-flow path 135A may be blocked. Specifically, in the second state S2, the blocking member 40 may block the first sub-flow path 135A from the first main flow path 131. In the second state S2, the first sub-flow path 135A may not be connected to the first main flow path 131. In the second state S2, the first sub-flow path 135A may be closed.

For example, the blocking member 40 may unidirectionally block the connection portion 135A_C by expanding in the second direction D2 within the connection portion 135A_C. The blocking member 40 can expand within the connection portion 135A_C from one inner wall toward the other inner wall to block the connection portion 135A_C. In this specification, blocking the connection portion 135A_C may mean blocking the passage so that material e.g., coolant cannot flow through the connection portion 135A_C, even if it is not completely sealed without any empty space.

Specifically, as the bimetal part 45 of the blocking member 40 expands in the second direction D2, the position of the plug part 47 may move in the second direction D2. For example, the relative position of the plug part 47 with respect to the fixed part 46 may move in the second direction D2. As a result, the plug part 47 may contact an inner wall of the connection portion 135A_C, thereby closing the first sub-flow path 135A. The inflow of coolant is blocked, preventing coolant from being supplied from the first main flow path 131 to the first sub-flow path 135A.

As described with reference to FIGS. 3 and 4, a blocking member 40 is disposed within the first sub-flow path 135A. Thus, upon occurrence of a thermal runaway event in the first battery cell assembly 120A, the first sub-flow path 135A can be isolated from the first main flow path 131, and the first sub-flow path 135A can be closed.

Unlike embodiments based on the technical concept of the present disclosure, when a thermal runaway event occurs in the first battery cell assembly 120A, the first sub-flow path 135A is not isolated from the first main flow path 131. Consequently, if coolant flows into the first sub-flow path 135A, it can be heated by the heat and flames potentially generated by the thermal runaway event. Such heated coolant may no longer be capable of cooling other battery cell assemblies e.g., the second battery cell assembly to the fifth battery cell assembly 120B to 120F due to its diminished cooling capacity.

According to embodiments based on the technical concept of the present disclosure, when the blocking member 40 expands to close the first sub-flow path 135A, the cooling performance of the coolant can be maintained longer, thereby enabling other battery cell assemblies (e.g., the second battery cell assembly to the fifth battery cell assembly 120B to 120F) can still be cooled. According to embodiments based on the technical concept of the present disclosure, the service life of the coolant can be extended.

Referring again to FIG. 2, blocking members are also disposed within the second sub-flow path 135B to the sixth sub-flow path 135F, so that when a thermal runaway event occurs in the second battery cell assembly 120B to the sixth battery cell assembly 120F, the second sub-flow path 135B to the sixth sub-flow path 135F can be closed, respectively.

According to embodiments based on the technical concept of the present disclosure, even without a separate control device or control signal, the expansion of the blocking member due to the temperature rise within the sub-flow path naturally achieves the effect of isolating the sub-flow path from the main flow path. Therefore, even in situations where a thermal runaway event occurs, potentially causing problems with the control device or preventing normal transmission of control signals, the sub-flow path can still be isolated from the main flow path. This enables the expected effect of maintaining coolant performance and extending coolant lifespan even during a thermal runaway event.

Examples based on the technical concept of the present disclosure provide a pack housing 110 with improved performance and reliability.

Examples based on the technical concept of the present disclosure can provide a pack housing 110 with enhanced safety.

Examples based on the technical concept of the present disclosure can provide a battery pack 100 including a pack housing 110 with improved performance and reliability.

Examples based on the technical concept of the present disclosure can provide a battery pack 100 including a pack housing 110 with enhanced safety.

### (Third embodiment)

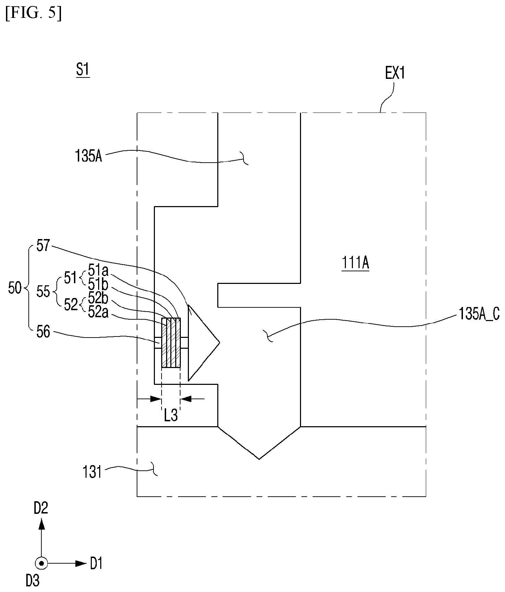

FIG. 5 is a plan view illustrating the blocking member 50 of the pack housing 110 according to exemplary embodiments based on the technical concept of the present disclosure. Specifically, FIG. 5 is an enlarged view of the EX1 region in FIG. 2, showing the blocking member 50 in the first state S1.

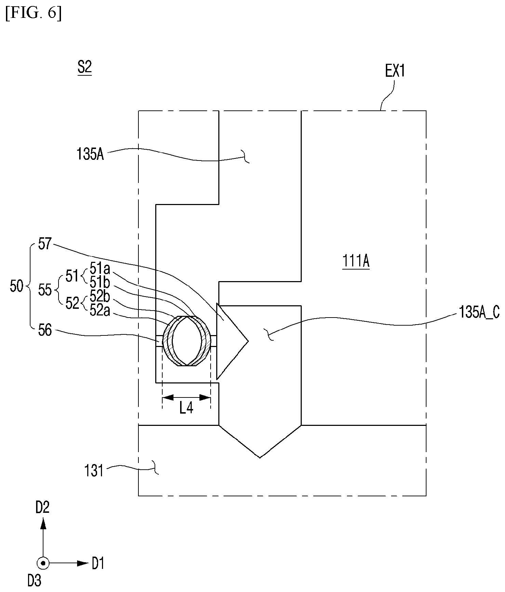

FIG. 6 is a plan view illustrating the blocking member 50 of the pack housing 110 according to exemplary embodiments based on the technical concept of the present disclosure. Specifically, FIG. 6 is an enlarged view of the EX1 region in FIG. 2, showing the blocking member 50 in the second state S2.

Referring collectively to FIGS. 2, 5, and 6, the blocking member 50 may be disposed within the first sub-flow path 135A. The blocking member 50 may be configured to close the first sub-flow path 135A upon occurrence of a thermal runaway event in the first battery cell assembly 120A. The following description will focus on the differences from the blocking member 40 described with reference to FIGS. 3 and 4.

The blocking member 50 may include a bimetal part 55, a fixed part 56, and a plug part 57. The bimetal part 55 may include a first metal and a second metal having different thermal expansion coefficients. For example, the thermal expansion coefficient of the first metal may be greater than that of the second metal. The bimetal part 55 may include a first layer 51 composed of a first metal layer 51a and a second metal layer 51b, and a second layer 52 composed of a first metal layer 52a and a second metal layer 52b. The second metal layer 51b of the first layer 51 and the second metal layer 52b of the second layer 52 may be disposed consecutively. For example, the second metal layer 51b of the first layer 51 and the second metal layer 52b of the second layer 52 may be disposed in contact.

The first layer 51 and the second layer 52 may be arranged in a first direction D1. The first metal layer 51a and the second metal layer 51b of the first layer 51 may be arranged in the first direction D1. The first metal layer 52a and the second metal layer 52b of the second layer 52 may be arranged in a first direction D1.

Specifically, the blocking member 50 may be disposed at the boundary between the first sub-flow path 135A and the first main flow path 131. For example, the first sub-flow path 135A may include two portions connected to the first main flow path 131, and the blocking member 50 may be disposed within these two sections. For example, it may include the boundary where coolant flows into the first sub-flow path 135A and the boundary where coolant flows out of the first sub-flow path 135A, and the blocking member 50 may be disposed at these two boundaries.

In a first state S1 as illustrated in FIG. 5, the first battery cell assembly 120A may be in a normal state where no thermal runaway event has occurred. In the first state S1, the temperature of the first battery cell assembly 120A may be a first temperature. For example, the first temperature may be below 100°C. For example, the first temperature may be below 60°C.

In the first state S1, the blocking member 50 may be in a non-expanded state. Specifically, the bimetal part 55 may be in a non-expanded state. In the first state S1, the length of the bimetal part 55 in the first direction D1 may be the third length L3. In the first state S1, the blocking member 50 may not block the first sub-flow path 135A. Specifically, in the first state S1, the blocking member 50 may not block the first sub-flow path 135A from the first main flow path 131. In the first state S1, the first sub-flow path 135A may be connected to the first main flow path 131.

For example, the first sub-flow path 135A may include a connection portion 135A_C with the first main flow path 131. The blocking member 50 may be disposed within the connection portion 135A_C. In the first state S1, the blocking member 50 may not completely block the connection portion 135A_C, leaving a void space. Coolant supplied from the first main flow path 131 may flow into the first sub-flow path 135A through the void space.

In the second state S2, as illustrated in FIG. 6, the first battery cell assembly 120A may be in a state where a thermal runaway event has occurred. In the second state S2, the temperature of the first battery cell assembly 120A may be a second temperature. The second temperature may be higher than the first temperature. For example, the second temperature may be 100°C or higher.

In the second state S2, the blocking member 50 may expand in a first direction D1. Specifically, the bimetal part 55 may expand in the first direction D1. For example, as the temperature of the first battery cell assembly 120A rises, the temperature within the first sub-flow path 135A may rise, and the bimetal part 55 may expand.

In the second state S2, the length of the bimetal part 55 in the first direction D1 may be a fourth length L4. For example, the fourth length L4 of the bimetal part 55 in the first direction D1 in the second state S2 may be greater than the third length L3 in the first direction D1 in the first state S1. For example, the length in the first direction D1 of the blocking member 50 in the second state S2 may be greater than the length in the first direction D1 in the first state S1.

In the second state S2, as the blocking member 50 expands in the first direction D1, the first sub-flow path 135A may be blocked. Specifically, in the second state S2, the blocking member 50 may block the first sub-flow path 135A from the first main flow path 131. In the second state S2, the first sub-flow path 135A may not be connected to the first main flow path 131. In the second state S2, the first sub-flow path 135A may be closed.

For example, the blocking member 50 may unidirectionally block the connection portion 135A_C by expanding in a first direction D1 within the connection portion 135A_C. The blocking member 50 can expand within the connection portion 135A_C from one inner wall toward the other inner wall, thereby blocking the connection portion 135A_C. For example, the blocking member 50 can block a passage through which coolant can pass within the connection portion 135A_C. Consequently, the inflow of coolant is blocked by the blocking member 50, preventing coolant from being supplied from the first main flow path 131 to the first sub-flow path 135A.

Examples based on the technical concept of the present disclosure provide a pack housing 110 with improved performance and reliability.

Examples based on the technical concept of the present disclosure can provide a pack housing 110 with enhanced safety.

Examples based on the technical concept of the present disclosure can provide a battery pack 100 including a pack housing 110 with improved performance and reliability.

Examples based on the technical concept of the present disclosure can provide a battery pack 100 including a pack housing 110 with enhanced safety.

### (Fourth embodiment)

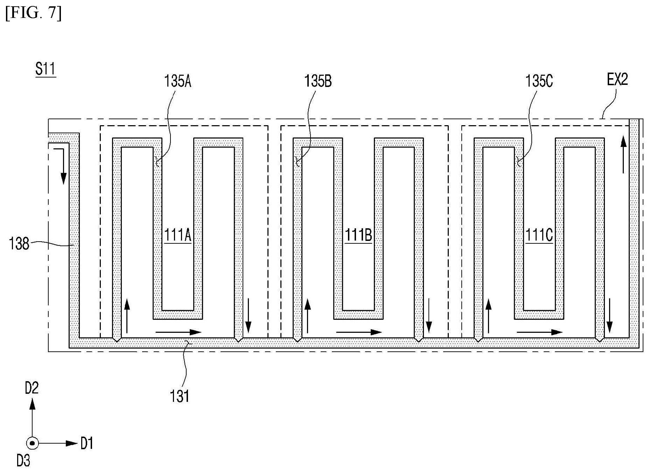

FIG. 7 is a plan view illustrating a battery pack 100 according to exemplary embodiments based on the technical concept of the present disclosure. Specifically, FIG. 7 is an enlarged view of the EX2 region in FIG. 2, illustrating the battery pack 100 in a first state S11.

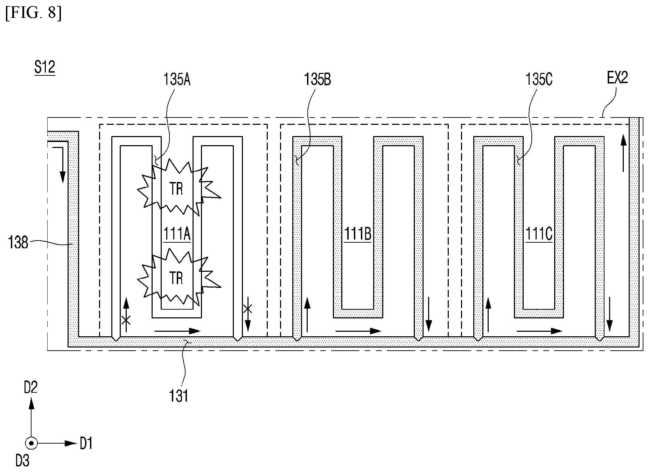

FIG. 8 is a plan view illustrating a battery pack 100 according to exemplary embodiments based on the technical concept of the present disclosure. Specifically, FIG. 8 is an enlarged view of the EX2 region in FIG. 2, illustrating the battery pack 100 in a second state S12.

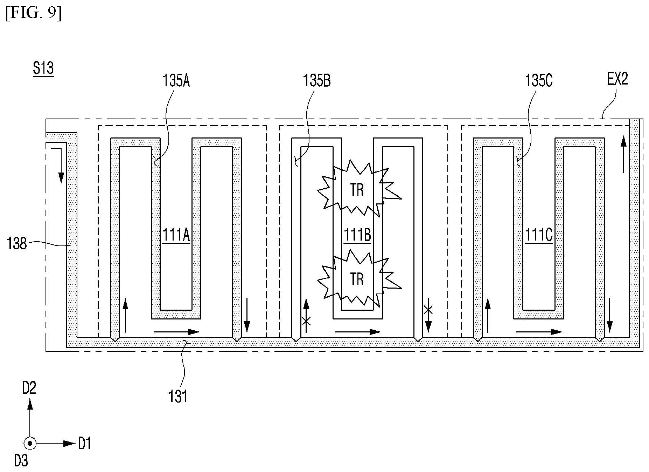

FIG. 9 is a plan view illustrating a battery pack 100 according to exemplary embodiments based on the technical concept of the present disclosure. Specifically, FIG. 9 is an enlarged view of the EX2 region in FIG. 2, illustrating the battery pack 100 in a third state S13.

Referring collectively to FIGS. 1, 2, and 7, in the first state S11, the first battery cell assembly 120A, the second battery cell assembly 120B, and the third battery cell assembly 120C of the battery pack 100 may be in a normal state where no thermal runaway event has occurred. In the first state S11, the temperature of the first battery cell assembly 120A, the second battery cell assembly 120B, and the third battery cell assembly 120C may be a first temperature. For example, the first temperature may be below 100°C. For example, the first temperature may be below 60°C.

A blocking member may be disposed within each of the first sub-flow path 135A, the second sub-flow path 135B, and the third sub-flow path 135C. For example, a blocking member 40 including a bimetal part 45 may be disposed, as illustrated in FIGS. 3 and 4. A blocking member 50 including a bimetal part 55 may be disposed, as illustrated in FIGS. 5 and 6.

In the first state S11, the blocking members including the bimetal parts disposed within the first sub-flow path 135A, the second sub-flow path 135B, and the third sub-flow path 135C, respectively, may be in a non-expanded state. Similar to what was described with reference to FIG. 3 or FIG. 5, the first sub-flow path 135A, the second sub-flow path 135B, and the third sub-flow path 135C may each be connected to the first main flow path 131 without being blocked from it.

In the first state S11, coolant 138 may be supplied from the first main flow path 131 to the first sub-flow path 135A, the second sub-flow path 135B, and the third sub-flow path 135C. Coolant 138 may flow into the first sub-flow path 135A, the second sub-flow path 135B, and the third sub-flow path 135C. For example, coolant may be supplied from the first main flow path 131 to the first sub-flow path 135A, and coolant passing through the first sub-flow path 135A may be supplied to the second sub-flow path 135B via the first main flow path 131. Coolant passing through the second sub-flow path 135B can be supplied to the third sub-flow path 135C via the first main flow path 131. Coolant passing through the third sub-flow path 135C can be supplied back to the first sub-flow path 135A via the second main flow path 132, etc. In other words, in the first state S11, the first main flow path 131 allows the first sub-flow path 135A, the second sub-flow path 135B, and the third sub-flow path 135C to communicate with each other.

Referring collectively to FIGS. 1, 2, and 8, in the second state S12, the first battery cell assembly 120A of the battery pack 100 may be in a state where a thermal runaway event TR has occurred. In the second state S12, the temperature of the first battery cell assembly 120A may be a second temperature. The second temperature may be higher than the first temperature in the first state S11. For example, the second temperature may be 100°C or higher.

In the second state S12, the blocking member, including the bimetal part within the first sub-flow path 135A, may be in an expanded state. Similar to what was described with reference to FIG. 4 or FIG. 6, the first sub-flow path 135A may be blocked from the first main flow path 131. The first sub-flow path 135A may not be connected to the first main flow path 131.

In the second state S12, coolant 138 may not be supplied from the first main flow path 131 to the first sub-flow path 135A. Coolant 138 may not flow into the first sub-flow path 135A. Therefore, the coolant 138 may not pass through the first sub-flow path 135A whose temperature has risen.

For example, as described above, the blocking member 40 may be disposed within an inlet part where coolant flows into the first sub-flow path 135A and an outlet part where coolant flows out from the first sub-flow path 135A. Thus, the first sub-flow path 135A is blocked from the first main flow path 131, preventing coolant 138 from flowing into the first sub-flow path 135A.

At this time, the second battery cell assembly 120B and the third battery cell assembly 120C may be in a state where a thermal runaway event TR has not occurred, and each may not be blocked from the first main flow path 131 and may be connected to the first main flow path 131. Coolant 138 may be supplied from the first main flow path 131 to the second sub-flow path 135B without passing through the first sub-flow path 135A. Similarly, the coolant 138 may be supplied from the first main flow path 131 to the third sub-flow path 135C without passing through the first sub-flow path 135A.

In the second state S12, the first sub-flow path 135A may be isolated from the second sub-flow path 135B and the third sub-flow path 135C.

Referring to FIGS. 1, 2, and 9, in the third state S13, the second battery cell assembly 120B of the battery pack 100 may be in a state where a thermal runaway event TR has occurred.

Similar to the description with reference to FIG. 8, a blocking member including a bimetal part within the second sub-flow path 135B may be in an expanded state, and by the blocking member, the second sub-flow path 135B may be blocked from and disconnected from the first main flow path 131.

In the third state S13, coolant 138 may not be supplied from the first main flow path 131 to the second sub-flow path 135B. Coolant 138 may not flow into the second sub-flow path 135B. Therefore, the coolant 138 may not pass through the second sub-flow path 135B whose temperature has risen.

For example, the blocking member may be disposed within an inlet part where coolant flows into the second sub-flow path 135B and an outlet part where coolant flows out from the second sub-flow path 135B. Thus, the second sub-flow path 135B is blocked from the first main flow path 131, preventing coolant 138 from flowing into the second sub-flow path 135B.

At this time, the first sub-flow path 135A and the third sub-flow path 135C under the first battery cell assembly 120A and the third battery cell assembly 130C, respectively, where no thermal runaway event TR has occurred, are not blocked from the first main flow path 131 and can be connected to the first main flow path 131. Coolant 138 may be supplied from the first main flow path 131 to the first sub-flow path 135A without passing through the second sub-flow path 135B. Similarly, coolant 138 may be supplied from the first main flow path 131 to the third sub-flow path 135C without passing through the second sub-flow path 135B.

In the third state S13, the second sub-flow path 135B may be isolated from the first sub-flow path 135A and the third sub-flow path 135C.

According to embodiments based on the technical concept of the present disclosure, when the first sub-flow path 135A closes upon occurrence of a thermal runaway event TR in the first battery cell assembly 120A, the cooling performance of the coolant can be maintained longer. Consequently, other battery cell assemblies (e.g., the second battery cell assembly to the fifth battery cell assembly 120B to 120F) can still be cooled. Specifically, it can cool not only the second battery cell assembly 120B adjacent to the first battery cell assembly 120A where the thermal runaway event TR occurred, but also the third battery cell assembly 120C that is not adjacent.

Similarly, according to embodiments based on the technical concept of the present disclosure, when the second sub-flow path 135B closes upon occurrence of a thermal runaway event TR in the second battery cell assembly 120B, the cooling performance of the coolant can be maintained longer. Consequently, other battery cell assemblies (e.g., the first battery cell assembly, the third battery cell assembly to the fifth battery cell assembly 120A, 120C to 120F) can still be cooled.

According to embodiments based on the technical concept of the present disclosure, the service life of the coolant can be extended.

According to embodiments based on the technical concept of the present disclosure, even without a separate control device or control signal, the expansion of the blocking member due to temperature rise within the sub-flow path can naturally produce the effect of isolating the sub-flow path from the main flow path. Therefore, even in a thermal runaway event where a problem occurs in the control device within the battery pack or the control signal may not be transmitted normally, the sub-flow path can be isolated from the main flow path. Consequently, it is possible to expect the effect of maintaining the performance of the coolant and extending its service life even during a thermal runaway event.

Examples based on the technical concept of the present disclosure provide a pack housing 110 with improved performance and reliability.

Examples based on the technical concept of the present disclosure provide a pack housing 110 with enhanced safety.

Examples based on the technical concept of the present disclosure can provide a battery pack 100 including a pack housing 110 with improved performance and reliability.

Examples based on the technical concept of the present disclosure can provide a battery pack 100 including a pack housing 110 with enhanced safety.

### (Fifth Embodiment)

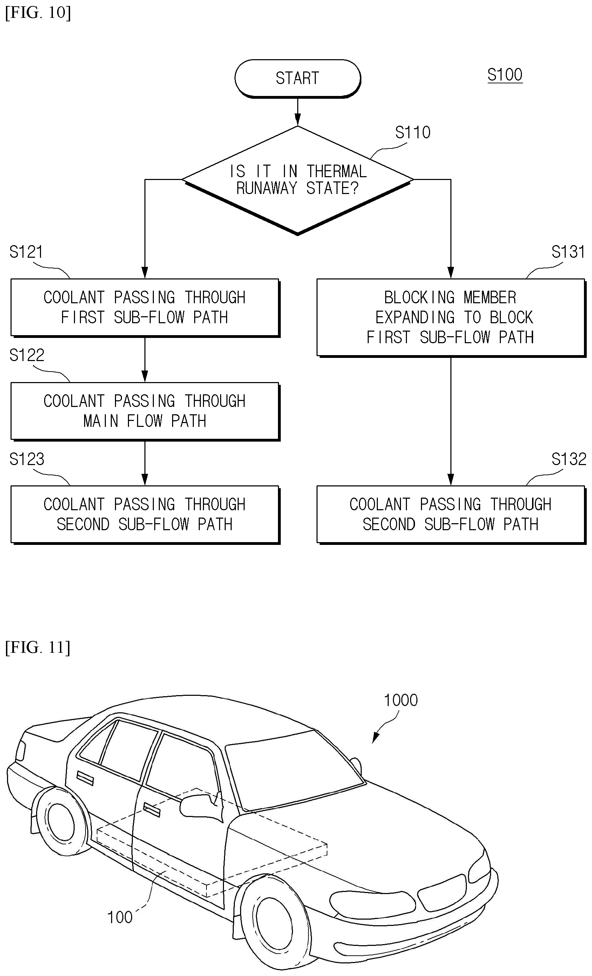

FIG. 10 is a flowchart illustrating a cooling method S100 for a battery pack according to exemplary embodiments based on the technical concept of the present disclosure.

Referring to FIGS. 1, 2, 7, and 8, whether coolant passes through the sub-flow path may vary depending on whether the battery cell assembly is in a thermal runaway state.

First, a step S110 of determining whether the battery cell assembly is in a thermal runaway state may be performed. In the embodiments, the step S110 of determining whether the battery cell assembly is in a thermal runaway state may not be performed separately. However, depending on the thermal runaway state, either a step S121 where the coolant 138 passes through the first sub-flow path 135A or a step S131 where the first sub-flow path 135A is closed may be performed.

The battery cell assembly may include a first state, which is a normal state, and a second state, which is a thermal runaway state. In the first state, the battery cell assembly may be at a first temperature. In the second state, the battery cell assembly may be at a second temperature higher than the first temperature. For example, the first temperature may be less than 100°C. For example, the first temperature may be less than 60°C. For example, the second temperature may be 100°C or higher.

In the first state, i.e., when the battery cell assembly (e.g., the first battery cell assembly 120A) is not in a thermal runaway state, as described with reference to FIG. 7, a step S121 wherein the coolant 138 passes through the first sub-flow path 135A, a step S122 where the coolant 138 passes through the main flow path (e.g., the first main flow path 131), and a step S123 where the coolant 138 passes through the second sub-flow path 135B may be performed.

In the second state, i.e., when the battery cell assembly (e.g., the first battery cell assembly 120A) is in a thermal runaway state, as described with reference to FIG. 8, a step S131 where the blocking members 40, 50 expand to close the first sub-flow path 135A, and a step S132 where the coolant 138 flows through the second sub-flow path 135B may be performed.

The step S131 where the first sub-flow path 135A is closed, as described with reference to FIG. 4 or FIG. 6, may include the blocking members 40, 50 within the first sub-flow path 135A expanding to block the first sub-flow path 135A from the main flow path (e.g., the first main flow path 131). As a result, coolant 138 may not pass through the first sub-flow path 135A.

The description of the blocking member 40, 50, the first sub-flow path 135A, and the first battery cell assembly 120A may be referred to as described with reference to FIGS. 1 through 6. For example, the first sub-flow path 135A may overlap the first battery cell assembly 120A in a third direction D3. The blocking member 40, 50 may include a bimetal part 45, 55 including a first metal and a second metal arranged in a first direction D1 or a second direction D2. In the second state, the blocking member 40, 50 can expand in the first direction D1 or the second direction D2. In the second state, the bimetal part 45, 55 can expand in the first direction D1 or the second direction D2.

According to embodiments based on the technical concept of the present disclosure, when the blocking member expands to close the first sub-flow path 135A, the cooling performance of the coolant can be maintained longer, and thus other battery cell assemblies (e.g., the second battery cell assembly to the fifth battery cell assembly 120B to 120F) can still be cooled. According to embodiments based on the technical concept of the present disclosure, the service life of the coolant can be extended.

According to embodiments based on the technical concept of the present disclosure, even without a separate control device or control signal, the expansion of the blocking member due to the temperature rise within the sub-flow path can naturally produce the effect of blocking the sub-flow path from the main flow path. Therefore, even in a thermal runaway event where the control device malfunctions or the control signal fails to transmit normally, the sub-flow path can be isolated from the main flow path. This enables maintaining the performance of the coolant and extending its service life even during a thermal runaway event.

According to exemplary embodiments based on the technical concept of the present disclosure, a cooling method S100 for a battery pack with improved performance and reliability can be provided.

According to exemplary embodiments based on the technical concept of the present disclosure, a cooling method S100 for a battery pack with enhanced safety can be provided.

### (Sixth embodiment)

FIG. 11 is a schematic diagram illustrating a vehicle 1000 including a battery pack according to exemplary embodiments based on the technical concept of the present disclosure.

Referring to FIG. 11, the vehicle 1000 may be, for example, an electric vehicle, a hybrid vehicle, or a plug-in hybrid vehicle, and may include a battery pack 100 according to an embodiment of the present disclosure. The vehicle 1000 may include four-wheeled vehicles and two-wheeled vehicles. The vehicle 1000 may operate by receiving power supplied from the battery pack 100 according to an embodiment of the present disclosure.

As described above, the battery pack 100 may include the blocking members 40, 50 described with reference to FIGS. 3 through 6. Thus, upon occurrence of a thermal runaway event in a battery cell assembly, the sub-flow path beneath that battery cell assembly can be isolated from the main flow path. Consequently, the cooling performance of the coolant is maintained longer, and the service life of the coolant can be extended.

Notably, even without a separate control device or control signal, the blocking member naturally expands due to temperature rise within the sub-flow path, thereby achieving the effect of isolating the sub-flow path from the main flow path. Consequently, the sub-flow path can be isolated from the main flow path even during a thermal runaway event where the control device malfunctions or the control signal fails to transmit normally. This enables the expectation of maintaining coolant performance and extending coolant lifespan even during thermal runaway events.

According to embodiments based on the technical concept of the present disclosure, a vehicle 1000 including a battery pack 100 with enhanced safety can be provided.

According to embodiments based on the technical concept of the present disclosure, a vehicle 1000 including a battery pack 100 with improved performance and reliability can be provided.

According to embodiments based on the technical concept of the present disclosure, a vehicle 1000 with enhanced safety can be provided.

According to embodiments based on the technical concept of the present disclosure, a vehicle 1000 with improved performance and reliability can be provided.

The present disclosure has been described in more detail above with reference to the drawings and embodiments. However, it is to be understood that the configurations shown in the drawings or embodiments described herein are only one embodiment of the disclosure and do not represent all of the technical ideas of the disclosure, and that there may be various equivalents and modifications that may be substituted for them at the time of filing the present application.

## Claims

1. A pack housing comprising:
a base plate intersecting a first direction;
a cooling channel within the base plate, comprising a sub-flow path and a main flow path supplying coolant to the sub-flow path; and
a blocking member within the sub-flow path, wherein
the blocking member comprises a bimetal part comprising a first metal and a second metal having different thermal expansion coefficients and arranged in a second direction intersecting the first direction.

2. The pack housing of claim 1, wherein
upon occurrence of a thermal runaway event of the battery cell assembly overlapping the sub-flow path in the first direction, the blocking member is configured to close the sub-flow path.

3. The pack housing of claim 1, wherein
the blocking member comprises a first state at a first temperature and a second state at a second temperature, wherein
the second temperature is higher than the first temperature, and
the length of the bimetal part in the second direction in the second state is greater than the length in the second direction in the first state.

4. The pack housing of claim 1, wherein
the blocking member comprises a first state at a first temperature and a second state at a second temperature, wherein
the second temperature is higher than the first temperature,
in the first state, the sub-flow path is connected to the main flow path, and
in the second state, the sub-flow path is blocked from the main flow path.

5. The pack housing of claim 4, wherein
in the first state, the coolant is supplied to the sub-flow path, and
in the second state, the coolant is not supplied to the sub-flow path.

6. The pack housing of claim 1, wherein
the blocking member further comprises a fixed part and a plug part, wherein
when the temperature of the battery cell assembly overlapping the sub-flow path in the first direction rises, the relative position of the plug part with respect to the fixed portion moves in the second direction.

7. The pack housing of claim 6, wherein
the sub-flow path further comprises a connection portion with the main flow path, wherein
the blocking member is disposed within the connection portion, and
upon temperature rise of the battery cell assembly, the plug part contacts an inner wall of the connection portion to close the sub-flow path.

8. The pack housing of claim 1, wherein
the blocking member comprises a first state at a first temperature and a second state at a second temperature, wherein
the second temperature is higher than the first temperature,
the sub-flow path further comprises a connection portion with the main flow path,
the blocking member is disposed within the connection portion, wherein
in the first state, the coolant flows into the sub-flow path through the connection portion, and
in the second state, the blocking member blocks the movement of the coolant through the connection portion.

9. The pack housing of claim 1, wherein
the bimetal part comprises a first layer and a second layer each comprising the first metal and the second metal, respectively, wherein
the second metal of the first layer and the second metal of the second layer are arranged consecutively in the second direction.

10. A battery pack comprising:
a pack housing comprising a base plate;
a cooling channel within the base plate, comprising a first sub-flow path and a main flow path supplying coolant to the first sub-flow path;
a first battery cell assembly on the base plate and overlapping the first sub-flow path in a first direction; and
a blocking member within the first sub-flow path, wherein
the first battery cell assembly comprises a first state at a first temperature and a second state at a second temperature, wherein
the second temperature is higher than the first temperature,
the blocking member comprises a bimetal part comprising a first metal and a second metal having different thermal expansion coefficients and arranged in a second direction intersecting the first direction, wherein
in the second state of the first battery cell assembly, the blocking member is configured to close the first sub-flow path.

11. The battery pack of claim 10, wherein
in the first state, the first sub-flow path is connected to the main flow path, and
in the second state, the first sub-flow path is blocked from the main flow path.

12. The battery pack of claim 10, wherein
the cooling channel further comprises a second sub-flow path, and further comprises
a second battery cell assembly overlapping the second sub-flow path in the first direction, wherein
in the first state, the main flow path is connected to both the first sub-flow path and the second sub-flow path, and the first sub-flow path communicates with the second sub-flow path through the main flow path, and
in the second state, the first sub-flow path is blocked from the second sub-flow path.

13. The battery pack of claim 12, wherein
in the first state, the coolant is supplied from the main flow path to the first sub-flow path, and subsequently from the first sub-flow path to the second sub-flow path via the main flow path, and
in the second state, the coolant is supplied from the main flow path to the second sub-flow path without passing through the first sub-flow path.

14. The battery pack of claim 10, wherein
the first state is a normal state of the first battery cell assembly, and
the second state is a thermal runaway state of the first battery cell assembly.
